(19) Europäisches Patentamt
European Patent Office
Office européen des brevets

(11) **EP 0 639 784 B1**

(12) **FASCICULE DE BREVET EUROPEEN**

(45) Date de publication et mention
de la délivrance du brevet:
**07.10.1998 Bulletin 1998/41**

(51) Int Cl.⁶: **G02B 27/28**, G02F 1/1335

(21) Numéro de dépôt: **94401778.9**

(22) Date de dépôt: **02.08.1994**

(54) **Boîte à lumière polarisée**

Polarisierender Leuchtkasten

Polarisation light box

(84) Etats contractants désignés:
**DE GB IT**

(30) Priorité: **20.08.1993 FR 9310154**

(43) Date de publication de la demande:
**22.02.1995 Bulletin 1995/08**

(73) Titulaire: **SEXTANT AVIONIQUE**
**92360 Meudon-la-Forêt (FR)**

(72) Inventeurs:
• **Ebert, Jean-Claude**
**F-92402 Courbevoie Cédex (FR)**
• **Ediar, Serge**
**F-92402 Courbevoie Cédex (FR)**
• **Lach, Patrick**
**F-92402 Courbevoie Cédex (FR)**

(74) Mandataire: **Beylot, Jacques et al**
**Thomson-CSF Propriété Intellectuelle,**
**13, Avenue du Président Salvador Allende**
**94117 Arcueil Cédex (FR)**

(56) Documents cités:
**EP-A- 0 359 345**          **DE-U- 8 801 498**

• **Japanese Journal of Applied Physics, Vol. 29,**
**No. 10, October 1990, pp. 1974-1984 M. Schadt et**
**al,: "New liquid crystal polarized color projection**
**principle"**

## Description

La présente invention concerne les sources de lumière destinées à l'éclairage de valves optiques pour la formation d'image et notamment à l'éclairage de valves optiques à base d'écrans à cristaux liquides.

Les valves optiques utilisées pour la formation d'image se présentent sous la forme d'une matrice plane de points qui définissent les pixels d'une image et dont on commande individuellement le degré de transparence à l'aide d'un signal électrique. Elles nécessitent un éclairement uniforme sur toute leur surface. En outre pour obtenir une finesse de détail s'approchant de la dimension de l'un de leurs points, il faut que leur éclairement se fasse dans une direction normale selon un cône d'éclairement d'angle d'ouverture aussi faible que possible.

Les matrices à cristaux liquides dites matrices LCD (de l'anglais Liquid Cristal Display) mettent à profit un changement de direction de polarisation de la lumière traversant un cristal liquide modifiable par un champ électrique. Pour pouvoir moduler en intensité un faisceau lumineux elles nécessitent d'être placées entre deux polariseurs l'un servant à polariser le faisceau d'éclairement et l'autre d'analyseur.

Pour répondre à ces exigences d'éclairement uniforme en lumière polarisée sous une incidence normale avec un cône d'éclairement étroit, il est connu d'utiliser des boîtes à lumière comportant une source lumineuse ponctuelle placée au foyer d'un miroir parabolique éclairant une fenêtre de sortie équipée d'un filtre polariseur linéaire absorbant l'une des deux composantes orthogonales de polarisation linéaire.

Ce type de boîte à lumière polarisée a l'inconvénient d'avoir un faible rendement lumineux en raison de l'absorption de près de la moitié de l'énergie lumineuse par le polariseur linéaire. Du fait de la présence du miroir parabolique nécessaire pour élargir le faisceau aux dimensions de la valve optique, il a également une épaisseur importante rendant difficile son emploi lorsque la place est comptée comme c'est le cas pour les systèmes de visualisation de bord pour aéronef. De plus, les sources lumineuses ponctuelles sont des sources chaudes à base de filaments chauffés qui se prêtent mal à un réglage de l'intensité lumineuse émise sans modification du spectre émis et donc de la coloration finale de l'image engendrée.

Pour améliorer le rendement lumineux, il a été proposé par Mrs Martin SCHADT et Jürg FÜNFSCHILLING, dans un article intitulé : "New Liquid Cristal Polarized Color Projection Principe" paru dans la revue : Japanese Journal of Applied Physics Vol. 29, No 10, October 1990, pages 1974-1984, de remplacer le filtre polariseur linéaire qui absorbe l'une des deux composantes orthogonales de polarisation par un polariseur cholestérique associé à une lame quart d'onde. La lumière non polarisée de la source lumineuse ponctuelle est décomposée par le polariseur cholestérique en deux composantes à polarisations circulaires inverses de sens droit et gauche dont l'une est transmise et transformée par la lame quart d'onde en une composante de polarisation linéaire et dont l'autre est réfléchie vers le miroir parabolique pour être retournée avec un sens de polarisation circulaire inversé de sorte qu'elle peut alors traverser le polariseur cholestérique et la lame quart d'onde, et sortir de la boîte à lumière avec la bonne polarisation. Le principe de conversion de la lumière non polarisée de la source lumineuse ponctuelle en une lumière à polarisation linéaire est ici basé sur la propriété des polariseurs cholestériques d'avoir une transmission et une réflexion sélectives en fonction du sens de polarisation circulaire et de la longueur d'onde et sur la propriété des miroirs d'inverser le sens de polarisation d'une lumière polarisée circulairement.

Si l'on améliore le rendement lumineux, on ne résoud pas le problème de l'épaisseur et donc de l'encombrement de la boîte à lumière ni celui du réglage de l'intensité lumineuse émise sans modification des couleurs. Pour ce faire, on peut songer à remplacer la source de lumière ponctuelle et son miroir parabolique par une source de lumière étendue. Une telle source de lumière peut être une source de lumière froide constituée d'une surface d'un matériau luminescent excité par un faisceau d'électrons ou un rayonnement électromagnétique de type ultraviolet ou micro-ondes. Malheureusement, la lumière obtenue n'est pas directive mais diffuse. De plus la suppression du miroir parabolique fait craindre que l'on ne puisse plus améliorer le rendement lumineux par l'utilisation d'un filtre cholestérique associé à une lame quart d'onde.

Cependant; il est connu, par le brevet européen EP-A-0 359 345 d'améliorer la directivité de l'éclairement de la couche électroluminescente d'un tube à rayon cathodique de projection d'image, à l'aide d'un filtre d'interférence accolé qui réfléchit les rayons lumineux obliques et ne se laisse traverser que par les rayons lumineux ayant une direction proche de la normale. Un tel tube à rayon cathodique, qui est à balayage, a l'inconvénient d'avoir une longueur de col importante lui donnant un encombrement en épaisseur important, comparable sinon supérieur à celui d'une source lumineuse ponctuelle.

Il est également connu par le modèle d'utilité allemand DE-U-88 01 498 un écran d'affichage en couleur à cristaux liquides basé sur l'absorption des ultraviolets. Cet écran d'affichage comporte une mosaïque de points de phosphore émettant dans le bleu, le vert et le rouge lorsqu'ils sont excités par de la lumière ultraviolette. La mosaïque de points de phosphore est éclairée par une source étendue de la lumière ultraviolette au travers d'un écran à cristaux liquides laissant passer ou absorbant les ultraviolets. Dans un mode de réalisation décrit, un filtre interférentiel est intercalé entre la mosaïque de points de phosphore et l'écran à cristaux liquides afin de laisser passer les ultraviolets et de réfléchir la lumière visible émise par les points de phosphore. On retrouve ici une combinaison d'une source étendue de lumière avec une fenêtre de sortie recouverte intérieurement d'une couche de phosphore, et d'un filtre interférentiel. Cependant, le filtre interférentiel est disposé entre la source étendue de lumière et la couche de phosphore et non devant la couche de phosphore de sorte qu'il n'a pas d'effet sur la lumière visible émise vers l'extérieur par la couche de phosphore et n'agit pas sur sa directivité.

La présente invention a pour but de lutter contre les divers inconvénients précités et d'obtenir une boîte à lumière polarisée de faible encombrement et de bon rendement lumineux émettant un faisceau large à éclairement uniforme.

Elle a pour objet une boîte à lumière polarisée comportant une source étendue de lumière avec une fenêtre de sortie équipée d'un filtre interférentiel et d'un polariseur cholestérique.

L'interposition du filtre interférentiel et du polariseur cholestérique sur le trajet du faisceau émis par la source étendue de lumière permet de renvoyer vers la source de lumière l'énergie lumineuse n'ayant pas la directivité et la polarisation désirée pour qu'elle subisse des réflexions multiples et puisse ressortir selon la polarisation et dans le cône d'ouverture désirés.

D'autres caractéristiques et avantages de l'invention ressortiront ci-après de la description d'un mode de réalisation donné à titre d'exemple. Cette description sera faite en regard du dessin dans lequel :

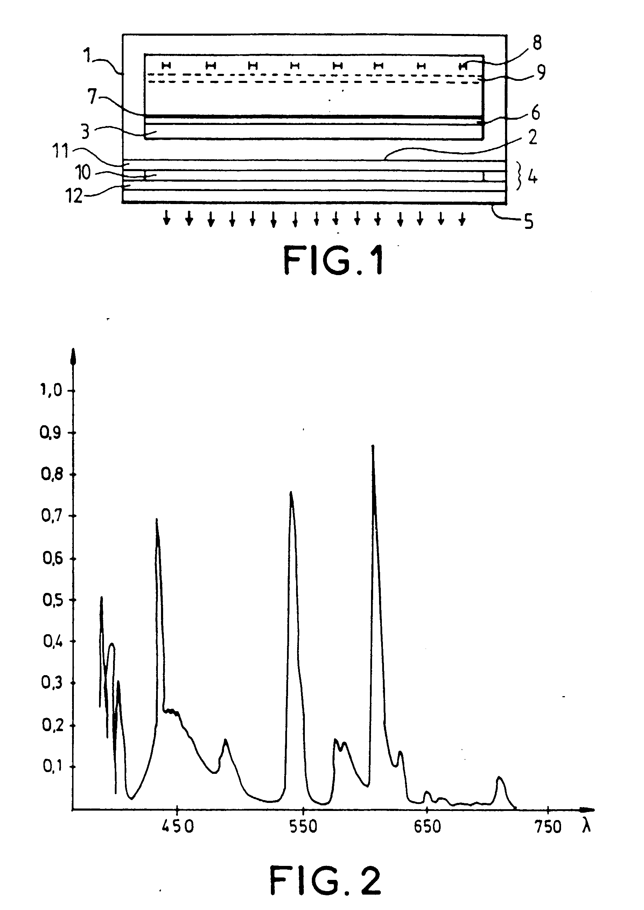

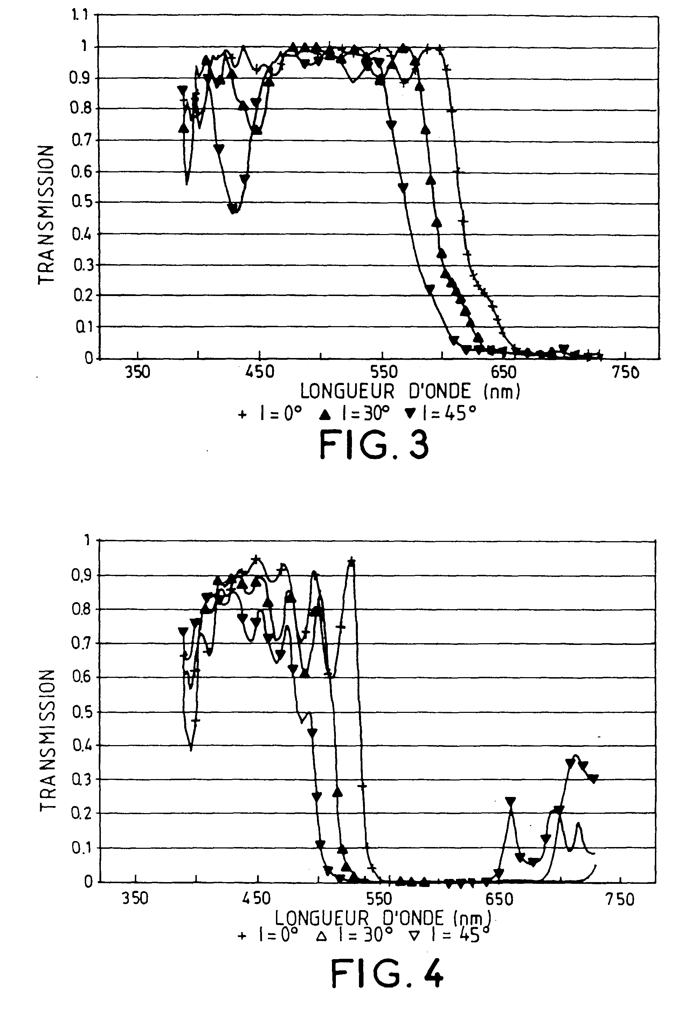

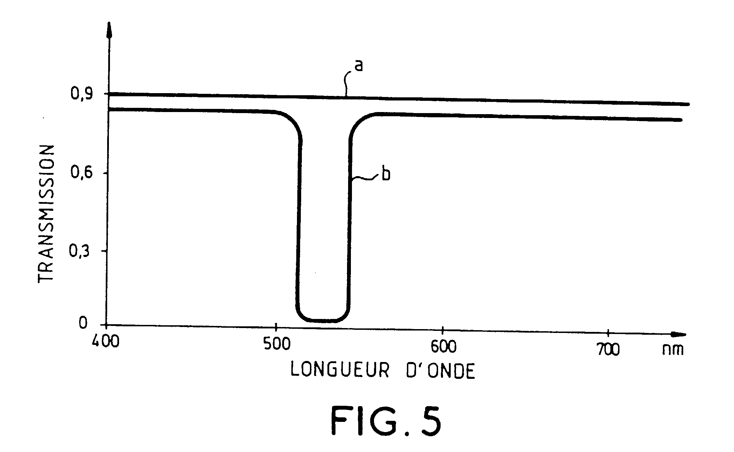

- une figure 1 est une vue schématique en coupe d'une boîte à lumière polarisée selon l'invention ;
- une figure 2 représente un spectre d'émission à raies multiples d'une couche de phosphore électroluminescent utilisé pour engendrer de la lumière blanche ;
- des figures 3 et 4 représentent des réseaux de courbes illustrant la variation du coefficient de transmission de deux filtres interférentiels passe-bas distincts, en fonction de la longueur d'onde du rayonnement lumineux incident et ce, pour différentes valeurs de l'angle d'incidence ; et
- une figure 5 représente un diagramme de transmission d'un polariseur cholestérique.

La boîte à lumière représentée à la figure 1 comporte un tube cathodique plat avec une enveloppe 1 en forme de dalle et une fenêtre écran 2 à filtre interférentiel 3 incorporé, et un polariseur cholestérique 4 associé à une lame quart d'onde 5 disposés l'un et l'autre devant la fenêtre écran 2 du tube cathodique.

Le tube cathodique constitue une source étendue de lumière froide de luminance uniforme, équipée d'un filtre interférentiel 3 rendant sa lumière directive. Le filtre interférentiel 3 est placé à l'intérieur du tube cathodique, directement sur la paroi interne de sa fenêtre écran 2. Il supporte une couche de phosphore électroluminescent 6 recouverte d'une électrode conductrice anodique 7 servant à la collecte des électrons utilisés pour exciter la luminescence du phosphore. La couche de phosphore électroluminescent 6 est bombardée au travers de l'électrode anodique 7 par un faisceau uniforme d'électrons engendré par un réseau de cathodes 8 complété par des électrodes d'accélération 9 disposés dans l'enveloppe 1 à proximité de la face arrière.

La couche de phosphore peut être constituée de différents types de phosphore tels les P43, P53, $Z_{ns}$, P56, P45,... et émettre soit une lumière blanche avec un spectre de raies multiples tel que celui représenté à la figure 2 soit une lumière monochrome avec un spectre monoraie.

Le filtre interférentiel opère sur les rayonnements incidents des interférences constructives ou destructives de sorte qu'il les transmet ou les réfléchit sans les absorber. Plus précisément, il est de type passe-bas, avec un coefficient de transmission, complémentaire de son coefficient de réflexion, qui diminue brutalement au delà d'une longueur d'onde dite de coupure dont la valeur est fonction de sa structure et de l'angle d'incidence. Le comportement d'un tel filtre interférentiel passe-bas est illustré par les réseaux de courbes des figures 3 et 4 qui représentent les évolutions typiques du coefficient de transmission en fonction de la longueur d'onde du rayonnement incident pour différents angles d'incidence et pour deux filtres interférentiels, l'un, figure 3, établi pour couper au delà de la couleur verte (560 nm) et l'autre, figure 4, établi pour couper au delà de la couleur bleue (480 nm).

A une longueur d'onde donnée, inférieure à la longueur d'onde de coupure, le coefficient de transmission d'un filtre interférentiel passe-bas reste voisin de 1 pour des faibles angles d'incidence puis décroît brutalement pour une valeur de transition de l'ordre de 30 à 45 degrés. Cette propriété du filtre interférentiel passe-bas d'être passant pour de faibles angles d'incidence et réfléchissant pour des angles d'incidence élevés est mise en oeuvre pour rendre directive la lumière émise par la couche de phosphore qui, à l'origine, est diffuse avec une luminance indépendante de la direction. Le filtre interférentiel passe-bas qui est choisi avec une longueur d'onde de coupure, sous incidence normale, supérieure à celles des raies d'émission de la couche de phosphore, se laisse traverser par les rayons lumineux émis par la couche de phosphore sous une incidence normale ou proche de la normale et réfléchit tous les autres rayons lumineux. Les rayons lumineux réfléchis retournent à la couche de phosphore à proximité de leurs points d'émissions d'origine, diffusent et subissent des réflexions multiples jusqu'à présenter un angle d'incidence suffisamment faible pour traverser le filtre interférentiel passe-bas.

En supposant que le filtre interférentiel limite le demi-angle d'ouverture du faisceau lumineux à une valeur θ, le gain en luminance est de :

$$1/sin^2\,\theta$$

Par rapport à une source lumineuse étendue de type lambertien, on obtient un gain de luminance en fonction du demi-angle d'ouverture θ illustré par le tableau suivant :

| θ (degrés) | 5 | 10 | 20 | 30 |
|---|---|---|---|---|
| gain | 130 | 33 | 8,5 | 8 |

Le comportement passe-bas du filtre interférentiel est également mis à profit, dans le cas d'une couche de phosphore engendrant une lumière monochrome, pour purifier la couleur émise en éliminant les raies parasites apparaissant dans le spectre à des longueurs d'onde supérieures à celle de la raie exploitée. C'est notamment vrai pour les couches de phosphore émettant dans le bleu (figure 4) où le filtre interférentiel passe-bas permet de réduire les émissions parasites dans le vert et le rouge, et pour les couches de phosphore émettant dans le vert (figure 3) où le filtre interférentiel passe-bas permet de réduire les émissions parasites dans le rouge. On obtient ainsi des couleurs plus saturées qui permettent, lorsque l'on fait de la polychromie par mélange de couleurs primaires, d'engendrer un plus grand nombre de teintes.

La réalisation du filtre interférentiel passe-bas ne sera pas détaillée car elle est bien connue de l'homme de métier. Elle peut se faire, soit par dépôt de minces couches successives de matériaux transparents ayant des indices de réfraction alternativement fort et faible, soit à l'aide d'un hologramme.

Le polariseur cholestérique 4 est constitué d'une ou plusieurs épaisseurs de cristaux liquides cholestériques 10 emprisonnées entre des lames de verre 11, 12.

Un cristal liquide cholestérique a la propriété d'être transparent et de réfléchir sélectivement une polarisation circulaire d'un sens donné droit ou gauche pour un domaine de longueurs d'onde donné, assez étroit, de l'ordre de 50 nm, qu'il est possible de déplacer dans le domaine du visible en fonction de la nature chimique du cristal liquide cholestérique considéré. La figure 5 illustre par ses courbes a et b la loi de transmission typique, en fonction de la longueur d'onde, respectivement en polarisation circulaire droite et gauche, d'un polariseur cholestérique vert.

Dans un cristal liquide cholestérique, l'indice extraordinaire s'oriente selon une hélice dont l'axe est situé selon la normale à la surface d'émission de la source lumineuse et dont le pas est fonction de la valeur de la longueur d'onde que l'on veut réfléchir. Pour que la lumière soit réfléchie, il faut qu'elle ait le bon sens de polarisation circulaire et qu'elle appartienne au domaine de longueur d'onde Δλ centré sur la longueur d'onde λ(i) dépendant de l'angle i d'incidence selon la formule :

$$\lambda(i)=\lambda_o\,cos\left[Arc\;sin\left(\frac{2\,sin\,i}{n_o+n_e}\right)\right]$$

avec:

$$\lambda_o=\frac{n_o+n_e}{2}\,p$$

$$\Delta\lambda=2\,\lambda_o\left(\frac{n_e-n_o}{n_e+n_o}\right)$$

$n_o$ étant l'indice de réfraction ordinaire, ne l'indice de réfraction extraordinaire et p le pas de l'hélice.

Dans le cas présent, on choisit le polariseur cholestérique de manière à ce qu'il réfléchisse une polarisation circulaire d'un sens donné droit ou gauche pour le domaine des longueurs d'onde d'émission de la source lumineuse. Ainsi, on obtient en sortie du polariseur cholestérique une lumière polarisée circulairement dans un sens gauche ou droit qui est celui transmis alors que la lumière émise par la source était à l'origine non polarisée et se composait également de lumière à polarisation circulaire droite et de lumière à polarisation circulaire gauche.

La lumière à polarisation circulaire dont le sens est réfléchi par le polariseur cholestérique revient à la couche de phosphore du tube cathodique où elle subit des réflexions multiples jusqu'à acquérir le bon sens de polarisation circulaire lui permettant de franchir le polariseur cholestérique.

Si le domaine des longueurs d'onde d'émission de la source lumineuse est trop large pour pouvoir être réfléchi d'un seul tenant par un seul cristal liquide cholestérique, ce qui est le cas d'une couche de phosphore émettant une lumière blanche, on utilise plusieurs épaisseurs successives de différents cristaux liquides cholestériques.

La lame quart d'onde 5 a une bande passante adaptée au domaine des longueurs d'onde d'émission de la source lumineuse de manière à transformer toute la lumière à polarisation circulaire transmise par le polariseur cholestérique 4 en une lumière polarisée linéairement.

Le gain en luminance dû à l'utilisation du filtre interférentiel et du polariseur cholestérique dépend des caractéristiques de ces derniers et de l'albédo de la source lumineuse. Il peut être apprécié à partir de la relation suivante :

$$Ltd(i,\lambda) = \frac{Td(i,\lambda)\ Tcd(i,\lambda)}{(1\text{-}Rd(i,\lambda)\ Rcd(i,\lambda))}\ \frac{Ls(\lambda)}{2(1\text{-}Ar)} \tag{1}$$

où :

$i$ est la variable angle d'incidence,

$\lambda$ est la variable longueur d'onde,

$Ltd\ (i,\lambda)$ est la luminance de la source vue au travers du polariseur cholestérique et du filtre interférentiel selon la polarisation circulaire droite,

$Td(i,\lambda)$ est la transmission du filtre interférentiel,

$Tcd(i,\lambda)$ est la transmission du polariseur cholestérique selon la polarisation circulaire droite,

$Rd(i,\lambda)$ est la réflexion du filtre interférentiel. Comme ce dernier n'absorbe pas la lumière, on a : $Td(i,\lambda) = 1\text{-}Rd(i,\lambda)$,

$Rcd(i,\lambda)$ est la réflexion du polariseur cholestérique selon la polarisation circulaire droite. Comme ce dernier n'absorbe pas la lumière, on : $Tcd(i,\lambda) = 1\text{-}Rcd(i,\lambda)$

$Ls(\lambda)$ est la luminance de la source lumineuse. Elle est supposée lambertienne, c'est-à-dire indépendante de la direction, uniforme sur toute la surface émissive et naturelle,

$A$ est le coefficient d'albédo de la source lumineuse,

$r$ est une fonction de la longueur d'onde $\lambda$ donnée par la formule :

$$r = \int_{o}^{\frac{\pi}{2}} 2\sin(i)\cos(i)\left[ Rd(i,\lambda) + \frac{Td^{2}(i,\lambda)}{2}\left( \frac{Rcd(i,\lambda)}{1 - Rd(i,\lambda)Rcd(i,\lambda)} + \frac{Rcg(i,\lambda)}{1 - Rd(i,\lambda)Rcg(i,\lambda)} \right) \right]di$$

$Rcg(i,\lambda)$ est la réflexion du polariseur cholestérique selon la polarisation circulaire gauche,

$Tcg(i,\lambda)$ est la transmission du polariseur cholestérique selon la polarisation circulaire gauche. Comme ce dernier n'absorbe pas la lumière, on a :

$$Tcg(i,\lambda) = 1\text{-}Rcg(i,\lambda)$$

La relation (1) qui vient d'être donnée, exprime la luminance de la source lumineuse vue au travers du filtre interférentiel et du polariseur cholestérique selon la polarisation circulaire droite. Une relation semblable déduite en remplaçant $LTd(\lambda,i)$ par $LTg(\lambda,i)$, $Tcd(\lambda,i)$ par $Tcg(\lambda,i)$ et $Rcd(\lambda,i)$ par $Rcg(\lambda,i)$ permet d'exprimer la luminance de la source vue au travers du filtre interférentiel et du polariseur cholestérique selon la polarisation circulaire gauche, mais du fait de l'effet du polariseur cholestérique, seule une de ces luminances a une valeur significative.

L'analyse de la relation (1) montre que le gain en luminance apporté par le filtre interférentiel et le polariseur cholestérique ne peut dépasser la valeur :

$$\frac{1}{2(1\text{-}A)}$$

soit, avec un albédo de 0,95, la valeur 10.

Le gain en luminance est d'autant plus important que le spectre est monochromatique. Il est à rapprocher de celui obtenu avec un simple polariseur linéaire qui ne dépasse pas 0,5.

En fait, si l'on veut garantir une luminance uniforme dans le cône de demi-angle d'ouverture θ, le gain en luminance ne pourra dépasser :

$$\dfrac{1}{2\left[1 - A\left(1 - \dfrac{sin^2(\theta)}{2}\right)\right]}$$

On remarque enfin que le gain en luminance apporté par le polariseur cholestérique est d'autant plus sensible que l'albédo de la source lumineuse est important ou que le cône d'ouverture du faisceau est grand lorsque l'albédo n'est pas égal à 1.

En variante, on peut notamment utiliser comme source lumineuse étendue, une rangée de tubes fluorescents devant laquelle est intercalé un écran diffuseur uniformisant l'intensité d'éclairement. Le filtre interférentiel est alors plaqué sur écran diffuseur à l'extérieur de la spurce, le polariseur cholestérique venant juste derrière.

**Revendications**

1. Boîte à lumière polarisée comportant une source étendue de lumière (1) ladite source ayant une fenêtre de sortie (2) équipée d'un filtre interférentiel (3) laissant passer les rayons lumineux ayant une incidence voisine de la normale et réfléchissant les autres caractérisée en ce qu'elle comporte en outre, sur sa fenêtre de sortie (2), à la suite du filtre interférentiel (3), un polariseur cholestérique réfléchissant l'une des composantes à polarisation circulaire droite ou gauche des rayons lumineux et se laissant traverser par l'autre.

2. Boîte à lumière polarisée selon la revendication 1, caractérisée en ce qu'elle comporte en outre une lame quart d'onde (5) placée à la suite du polariseur cholestérique (4).

3. Boîte à lumière polarisée selon la revendication 1, caractérisée en ce que la source étendue de lumière (1) est un tube cathodique avec une fenêtre écran (2) recouverte intérieurement d'une couche de phosphore électroluminescent (6) accolée à ledit filtre interférentiel (3).

4. Boîte à lumière polarisée selon la revendication 3, caractérisée en ce que le filtre interférentiel (3) est placé à l'intérieur du tube cathodique sur la paroi interne de sa fenêtre écran (2), au contact de la couche de phosphore électroluminescent (6).

5. Boîte à lumière polarisée selon la revendication 1, caractérisée en ce que la source étendue de lumière comporte un réseau de tubes fluorescents disposés derrière un écran diffuseur sur lequel est plaqué le filtre interférentiel.

6. Boîte à lumière polarisée selon la revendication 1, caractérisée en ce que le filtre interférentiel (5) est formé d'un dépôt de minces couches successives de matériaux transparents ayant des indices de réfraction alternativement fort et faible.

7. Boîte à lumière polarisée selon la revendication 1, caractérisée en ce que le filtre interférentiel (5) est constitué d'un hologramme.

**Patentansprüche**

1. Kasten für polarisiertes Licht mit einer ausgedehnten Lichtquelle (1), die ein Ausgangsfenster (2) mit einem Interferenzfilter (3) besitzt, das die Lichtstrahlen mit einem Einfallswinkel nahe der Senkrechten durchläßt und die anderen reflektiert, dadurch gekennzeichnet, daß der Kasten außerdem auf dem Ausgangsfenster hinter dem Interferenzfilter (3) einen cholesterischen Polarisator besitzt, der eine der zirkularen Polarisationskomponenten, links- oder rechtsdrehend, der Lichtstrahlen reflektiert und von der anderen Komponente durchquert wird.

2. Kasten für polarisiertes Licht nach Anspruch 1, dadurch gekennzeichnet, daß er außerdem ein λ/4-Plättchen (5) hinter dem cholesterischen Polarisator (4) besitzt.

**EP 0 639 784 B1**

3. Kasten für polarisiertes Licht gemäß Anspruch 1, dadurch gekennzeichnet, daß die ausgedehnte Lichtquelle (1) eine Kathodenröhre mit einem Schirmfenster (2) ist, das innen von einer Elektrolumineszenz-Phosphorschicht (6) bedeckt ist, die auf dem Interferenzfilter (3) aufliegt.

4. Kasten für polarisiertes Licht nach Anspruch 3, dadurch gekennzeichnet, daß das Interferenzfilter (3) in der Kathodenröhre auf der Innenwand des Schirmfensters (2) in Kontakt mit der Elektrolumineszenz-Phosphorschicht (6) liegt.

5. Kasten für polarisiertes Licht nach Anspruch 1, dadurch gekennzeichnet, daß die ausgedehnte Lichtquelle ein Netz von Fluoreszenröhren enthält, die hinter einem Diffusionsschirm liegen, auf den das Interferenzfilter aufgesetzt ist.

6. Kasten für polarisiertes Licht nach Anspruch 1, dadurch gekennzeichnet, daß das Interferenzfilter (5) von einer Folge dünner Schichten aus transparenten Materialien mit abwechselnd hohem und niedrigem Brechungsindex gebildet wird.

7. Kasten für polarisiertes Licht nach Anspruch 1, dadurch gekennzeichnet, daß das Interferenzfilter (5) von einem Hologramm gebildet wird.

**Claims**

1. Polarized light box comprising an extended light source (1), the said source having an exit window (2) equipped with an interference filter (3) allowing through those light rays having a near-normal angle of incidence and reflecting the others, characterized in that it furthermore comprises, on its exit window (2), following the interference filter (3), a cholesteric polarizer which reflects one of the right or left circularly polarized components of the light rays and allows the other through.

2. Polarized light box according to Claim 1, characterized in that it further comprises a quarter-wave plate (5) placed after the cholesteric polarizer (4).

3. Polarized light box according to Claim 1, characterized in that the extended light source (1) is a cathode-ray tube with a screen window (2) coated internally with a layer of electroluminescent phosphorus (6), affixed to the said interference filter (3).

4. Polarized light box according to Claim 3, characterized in that the interference filter (3) is placed inside the cathode-ray tube on the internal wall of its screen window (2) in contact with the layer of electroluminescent phosphorus (6).

5. Polarized light box according to Claim 1, characterized in that the extended light source comprises an array of fluorescent tubes positioned behind a diffusive screen against which the interference filter is placed.

6. Polarized light box according to Claim 1, characterized in that the interference filter (5) is formed by a deposit of successive thin layers of transparent materials having alternately high and low refractive indices.

7. Polarized light box according to Claim 1, characterized in that the interference filter (5) is constituted by a hologram.

FIG.1

FIG.2

FIG. 3

FIG. 4

FIG.5